# EUROPEAN PATENT SPECIFICATION

(11) **EP 2 062 686 B1**
(45) Date of publication and mention of the grant of the patent: **02.06.2010**
(21) Application number: 08020040.5
(22) Date of filing: 17.11.2008
(51) Int. Cl.: B23Q 17/20, B23B 25/06

(54) **Machine tool, and measuring method**
Maschinenwerkzeug und Messverfahren
Machine-outil et procédé de mesure

(30) Priority: 22.11.2007 JP 2007303137
(43) Date of publication of application: 27.05.2009
(73) Proprietor: Murata Machinery, Ltd., Minami-ku Kyoto-shi Kyoto 601-8326 (JP)
(72) Inventor: Tanaka, Makoto, Kyoto-shi Kyoto 612-8686 (JP)
(74) Representative: Grünecker, Kinkeldey, Stockmair & Schwanhäusser Anwaltssozietät

(56) References cited:
- GB-A- 2 141 546
- JP-A- 58 068 608
- JP-A- 63 232 960
- JP-U- 07 003 902
- US-A- 5 065 035

## Description

### BACKGROUND OF THE INVENTION

### (1) Field of the Invention

The present invention relates to machine tools that perform metal machining with cutting tools held by a turret tool post, and particularly relates to a technique for measuring the dimensions of workpieces to be machined.

### (2) Description of the Related Art

One of conventionally available machine tools is a turret lathe having a turret that is a rotatable tool-selection mechanism.

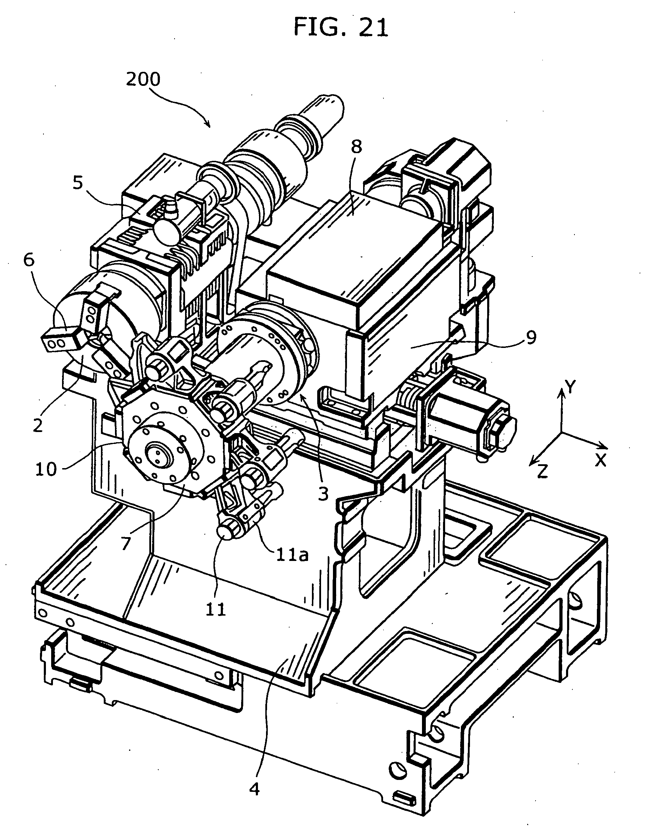

FIG. 21 is an external perspective view showing an example of a common conventional turret lathe. As FIG. 21 shows, a turret lathe 200 includes a spindle' 2 and a turret 3.

The spindle 2 is supported by a headstock 5 provided on a bed 4, and rotates while holding a workpiece (not shown) with a spindle chuck 6.

The turret 3 includes a turret tool post 7, an indexing mechanism 8, and a turret slide 9.

The turret tool post 7 has tool holding faces 10 around its rotation axis, and is rotatably supported by the indexing mechanism 8.On each of the tool holding faces 10, a tool 11, such as a tool bit and a drill, is inserted through a tool station 11a.

The rotation axis of the spindle 2 and the rotation axis of the turret tool post 7 are connected with a straight line parallel to the X-axis.

The indexing mechanism 8 is provided on the turret slide 9, and, through a motor, rotates the turret tool post 7.As a result, the indexing mechanism 8 positions a specific tool holding face 10 on the workpiece side.

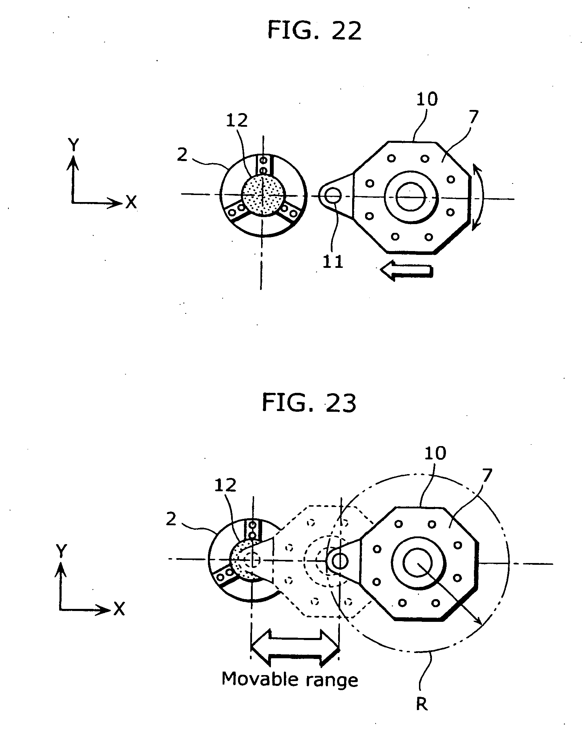

FIG. 22 is an elevation view showing a positional relationship between the turret tool post 7 and the spindle 2 of the turret lathe 200.

As FIG. 22 shows, the turret tool post 7 rotates so that the tool 11 for machining the workpiece 12 comes to a position on the workpiece 12 side and on the straight line which goes through the rotation axis of the spindle 2 and which is parallel to the X-axis. In other words, the tool 11 is indexed.

Further, through a motor, the indexing mechanism 8 moves the turret tool post 7 along the Z-axis direction parallel to the rotation axis of the spindle 2.

The turret slide 9 is provided on the bed 4 to be movable along the X-axis direction orthogonal to the Z-axis direction. The turret slide 9 moves along the X-axis direction together with the turret tool post 7 and the indexing mechanism 8 through a motor.

Such movement of the turret tool post 7 along the X- and Y-axis directions allows the workpiece 12 held by the rotatable spindle 2 to be machined by the tool 11 indexed on the workpiece 12 side.

The above described structure is normally placed in a housing (not shown), and workpieces are machined therein.

Some machine tools such as turret lathes have a function to measure the dimensions of workpieces in the machine tools.

This function enables the dimension measurement to be performed without having to take out the workpieces outside the machine tool, and thus the work efficiency improves.

Further, by measuring displacement of workpieces and/or displacement of the machine tool caused by changes in the in-machine environment such as a variation in the temperature, and by calibrating a control amount for the machine tool according to the measured displacement, it is possible to ensure highly accurate dimension measurement.

For example, a turret lathe is available which has a function for measuring workpiece diameters with a sensor mounted on a tool holding face of the turret tool post through a tool station or through similar fitting equipment.

With such a turret lathe, one or more positions on the outer circumference of a workpiece positioned closer to the turret tool post than to the rotation axis of the spindle are measured using the sensor, and the diameter is calculated from the measured values.

Such a calculation method is adopted because it has been impossible to extend the maximum rotation radius of the turret tool post having tool stations and tools.

FIG. 23 is a diagram showing the maximum rotation radius and a movable range of the turret tool post having tool stations in a common turret lathe.

As FIG. 23 shows, with the conventional turret lathe 200, the turret tool post 7 moves along the X-axis within a range that the tool 11 positioned at a cutting position moves slightly beyond the rotation axis of the spindle 2.

Such an X-axial, movable range of the turret tool post 7 raises no problem for boring and cutting the outer circumference of the workpiece 12, and so on.

However, when the sensor is mounted on fitting equipment such as the tool station 11a, it is substantially impossible to measure the position on a side opposite to the turret tool post 7 with the rotation axis of the spindle 2 positioned in between.

Obviously, if the fitting equipment is radially long, it is possible to measure a lateral position of the workpiece beyond the rotation axis of the spindle 2.

However, the maximum rotation radius R of the turret tool post 7 having fitting equipment such as the tool station 11a, and tools and the like held by such fitting equipment is desired to be short.

This is to prevent the fitting equipment and the tools and so on from interfering with other structural elements of the machine tool when the turret tool post 7 rotates; to achieve size reduction of the entire turret lathe 200; to ensure that the tools are positioned accurately with respect to the turret tool post 7; and so on.

As stated above, when the workpiece diameter is calculated through measurement of a position on one side of the workpiece outer circumference with respect to the rotation axis of the spindle 2, distortions of workpieces and/or the machine tool caused by changes in the in-machine environment such as a variation in the temperature make it difficult to obtain accurate values.

In view of the above, a turret lathe has been proposed which has a mechanism for direct measurement of workpiece diameters through measurement of both ends of each workpiece diameter (refer to Patent Reference 1: Japanese Unexamined Utility Model Application Publication No. 07-3902, for example).

JP-U-07-3902 discloses a turret lathe comprising the features of the preamble of claim 1 of the present invention.

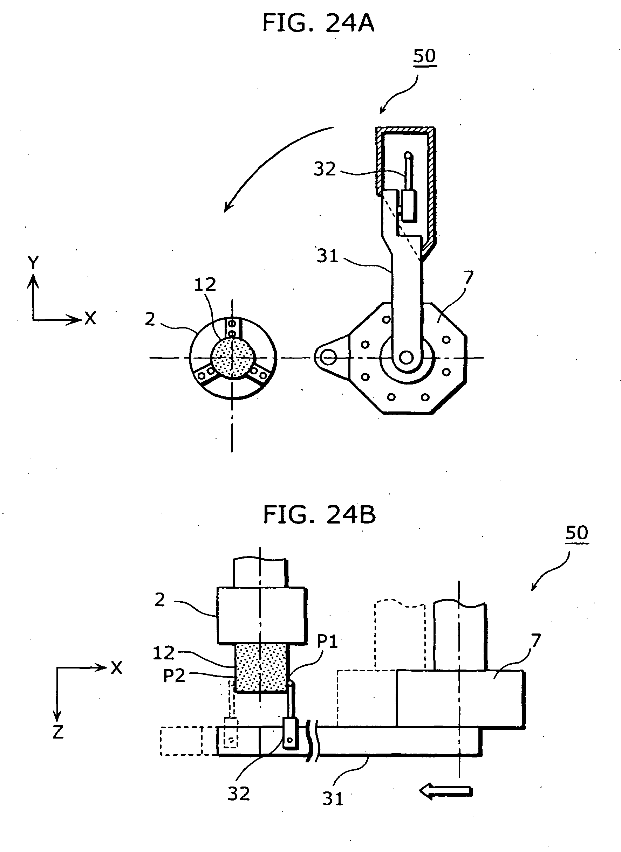

FIGS. 24A and 24B are schematic diagrams each showing an example of a conventional turret tool post having a mechanism for direct measurement of workpiece diameters. FIG. 24A is an anterior view and FIG. 24B is a top view.

A turret lathe 50 shown in FIGS. 24A and 24B has an arm 31 at the front of the turret tool post 7.The arm 31 is rotatably supported by a non-rotating member located at the center of the turret tool post 7.Further, a sensor 32 is mounted at the tip portion of the arm 31.

The length of the arm 31 is sufficient for the sensor 32 to measure the position of one end (P2) of the diameter of the workpiece 12, out of both ends (P1 and P2), which is on a side opposite to the turret tool post 7 with the rotation axis of the spindle 2 positioned in between, when the turret tool post 7 approaches the spindle 2.

With such a structure, the turret lathe 50 is capable of measuring the positions of both ends P1 and P2 of the diameter of the workpiece 12 as shown in FIG. 24B. The diameter of the workpiece 12 can be derived from the difference between P1 and P2 obtained in such a manner.

However, the conventional technique does not achieve size reduction of the turret lathe, because the arm on which the sensor is mounted is provided separately from the turret tool post.

In addition, as FIGS. 24A and 24B show, the rotating radius of the arm is relatively long, which may disable the placement of the arm itself.

Furthermore, the arm provided at the front of the turret tool post is liable to hinder tool replacement.

### SUMMARY OF THE INVENTION

The present invention has been conceived in view of such problems of the prior art described above, and it is an object of the present invention to provide a machine tool which performs in-machine measurement of workpiece dimensions and is capable of accurate measurement of workpiece diameters while achieving size reduction of the machine tool.

In order to overcome the problems of the prior art described above, the machine tool of the present invention is a machine tool for machining a workpiece held by a spindle, the machine tool comprising: a turret tool post having tool holding faces characterized in that, said machine tool further comprising, a sensor for measuring dimensions of the workpiece; and a distance-extending-and-shortening mechanism mounted on one of the tool holding faces, the distance-extending-and-shortening mechanism holding the sensor and extending and shortening a sensor distance which is a distance between the one of the tool holding faces and the sensor in a radial direction of the turret tool post, wherein, while the sensor distance is shortened, a length of the distance-extending-and-shortening mechanism in the radial direction is such that the distance-extending-and-shortening mechanism and the sensor do not interfere with another structural element of the machine tool when the turret tool post rotates.

According to this structure, the sensor is mounted on a tool holding face of the turret tool post through the distance-extension-and-shortening mechanism. While the sensor distance is shortened, the distance-extension-and-shortening mechanism and the sensor do not hinder the turret tool post from rotating.

Further, when the sensor distance is extended, the sensor can be positioned on a side beyond the rotation axis of a spindle from the viewpoint of the turret tool post. As a result, the measurement of the positions of both ends of the diameter of workpieces held by the spindle is possible.

Thus, the present invention can provide a machine tool which performs in-machine measurement of workpiece dimensions and is capable of accurate measurement of workpiece diameters while achieving size reduction.

Further, it may be that the distance-extending-and-shortening mechanism includes an arm which rotationally moves, the distance-extending-and-shortening mechanism extending and shortening the sensor distance through a rotational movement of the arm with the sensor held on an end of the arm.

Furthermore, it may be that the distance-extending-and-shortening mechanism includes a support strut which extends and retracts in the radial direction, the distance-extending-and-shortening mechanism extending and shortening the sensor distance through extension and retraction of the support strut with the sensor held on an end of the support strut, the end being on a side opposite to the one of the tool holding faces.

As described, the distance-extension-and-shortening mechanism according to the present invention may be a mechanism that extends and shortens the sensor distance through a rotational or linear movement, that is, a mechanism that changes the radial position of the sensor through a rotational or linear movement.

Moreover, it may be that while the sensor distance is extended, the length of the distance-extending-and-shortening mechanism in the radial direction when a workpiece with a maximum diameter that the spindle can hold is held by the spindle is such that the sensor is positioned on a side opposite to the turret tool post with the workpiece positioned in between, and the sensor detects positions of both ends of a diameter of the workpiece through a movement of the turret tool post while the sensor distance is extended by the distance-extending-and-shortening mechanism, the ends of the diameter being on a plane which includes a rotation axis of the turret tool post and a rotation axis of the spindle.

As described, since the length of the distance-extension-and-shortening mechanism in the extended state is determined according to the maximum diameter of the workpiece to be machined by the machine tool, accurate measurement of the workpiece diameter is possible irrespective of types of workpieces held by the spindle.

Furthermore, the machine tool may further comprises a control unit configured to: cause the distance-extending-and-shortening mechanism to extend the sensor distance; and move the turret tool post so that a distance between the sensor and the workpiece varies, when the turret tool post is at a rotation position at which the sensor is on a side towards the workpiece.

Having such a control unit that controls the rotation positions of the turret tool post and the operation of the distance-extension-and-shortening mechanism, such as extension and retraction of the distance-extension-and-shortening mechanism, enables accurate and efficient measurement of workpiece diameters, for example.

In addition, the present invention can also be embodied as a method for measuring workpiece diameters with characteristic operational steps performed by the machine tool and sensor module of the present invention. Further, the present invention may be embodied as a control program that causes a machine tool and a sensor module to execute such steps.

Furthermore, the present invention may be embodied as a recording medium on which such a control program is recorded. In addition, such a control program may be distributed via a transmission medium such as the Internet, and/or a recording medium such as DVD.

According to the machine tool of the present invention, direct measurement of workpiece diameters is possible using a sensor mounted on a turret tool post via an extension-and-shortening mechanism. Further, the extension-and-shortening mechanism and the like neither wastefully occupies the in-machine space nor hinders the rotation of the turret tool post.

As described, the present invention provides a machine tool capable of accurate in-machine measurement of workpiece diameters while achieving size reduction. In addition, the present invention provides a measuring method that bring about such advantageous effects for a machine tool.

### FURTHER INFORMATION ABOUT TECHNICAL BACKGROUND TO THIS APPLICATION

The disclosure of Japanese Patent Application No. 2007-303137 filed on November 22, 2007 including specification, drawings and claims is incorporated herein by reference in its entirety.

### BRIEF DESCRIPTION OF THE DRAWINGS

These and other objects, advantages and features of the invention will become apparent from the following description thereof taken in conjunction with the accompanying drawings that illustrate a specific embodiment of the invention. In the Drawings:
FIG. 1 is a perspective view showing the external appearance of a turret lathe according to Embodiment 1 of the present invention;
FIG. 2 is an enlarged perspective view showing the external appearance of a sensor module in a retracted state according to Embodiment 1;
FIG. 3 is an enlarged perspective view showing the external appearance of a sensor module in an extended state according to Embodiment 1;
FIG. 4 is a block diagram showing the fundamental, functional structure of a turret lathe according to Embodiment 1;
FIG. 5 is an enlarged elevation view showing the external appearance of a sensor module in a retracted state according to Embodiment 1;
FIG. 6 is an enlarged elevation view showing the external appearance of a sensor module in an extended state according to Embodiment 1;
FIG. 7 is a schematic diagram showing an example of operational flow for measuring, by a turret lathe of Embodiment 1, the diameter of a workpiece;
FIG. 8 is an enlarged perspective view showing the external appearance of a sensor module according to Embodiment 2 of the present invention;
FIG. 9 is an enlarged perspective view showing the external appearance of the sensor module with its arm rotated 90° from the state shown in FIG. 8;
FIG. 10 is an enlarged perspective view showing the external appearance of the sensor module with its arm further rotated 90° from the state shown in FIG. 9;
FIG. 11 is an enlarged elevation view showing the external appearance of a sensor module with a sensor distance shortened according to Embodiment 2;
FIG. 12 is a plan view showing the structure of a sensor module according to Embodiment 2;
FIG. 13 is a perspective view showing the externa appearance of a cam;
FIG. 14 is a diagram showing an overview of the inner structure of a gearbox;
FIG. 15 is a schematic diagram showing how a cam moves;
FIG. 16 is a diagram showing the closed states of a first cover piece and a second cover piece;
FIG. 17 is a diagram showing the states of a first cover piece and a second cover piece before they are completely open;
FIG. 18 is a diagram showing the states of a first cover piece and a second cover piece when they are completely open;
FIG. 19 is a diagram showing a flow of sensor module operations when a first cover piece and a second cover piece are opening;
FIG. 20 is a diagram showing an example of a positional relationship between a sensor module and a workpiece at the time of measuring the workpiece diameter;
FIG. 21 is an external perspective view showing an example of fundamental elements of a common conventional turret lathe;
FIG. 22 is an elevation view showing a positional relationship between a turret tool post and a spindle of a common conventional turret lathe;
FIG. 23 is a diagram showing the maximum rotation radius and a movable range of a turret tool post in a common conventional turret lathe;
FIG. 24A is an anterior view of fundamental elements of a conventional turret tool post having a mechanism for measuring workpiece diameters; and
FIG. 24B is a top view corresponding to FIG. 24A.

### DESCRIPTION OF THE PREFERRED EMBODIMENT(S)

### (Embodiment 1)

A turret lathe according to Embodiment 1 of the present invention, which is an example of a machine tool, shall be described in detail with reference to the drawings.

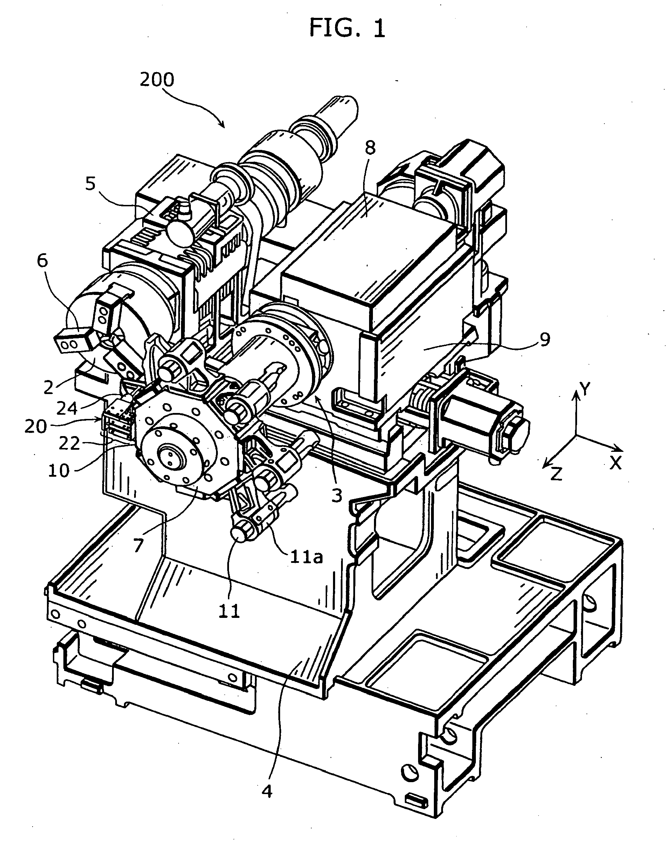

First, with reference to FIGS. 1 to 3, the structure of the turret lathe according to Embodiment 1 shall be described.

FIG. 1 is a perspective view showing the external appearance of the turret lathe according to Embodiment 1 of the present invention.

As FIG. 1 shows, the basic structure of a turret lathe 1 is the same as that of the common, conventional turret lathe 200 shown in FIG. 21. More specifically, the turret lathe 1 includes a spindle 2 that rotates while holding a workpiece, a turret 3 that is a rotatable, tool-selection mechanism, and so on.

Unlike the turret lathe 200, however, the turret lathe 1 further includes a sensor module 20 as a characteristic, structural element.

The sensor module 20 has a support strut 22 that extends and retracts radially of the turret tool post 7 and a sensor 24 for measuring workpiece dimensions, and is capable of extending and retracting as a whole.

Further, in the same manner as the tool station 11a, the sensor module 20 is mounted on a tool holding face 10 of the turret tool post 7.

In other words, the sensor 24 is mounted on the turret tool post 7 as though it is a tool.

It is to be noted that in the turret lathe 1 of the present embodiment, the rotation axis of the spindle 2 and that of the turret tool post 7 are parallel. Further, a plane that includes these two rotation axes is parallel to the X-axis.

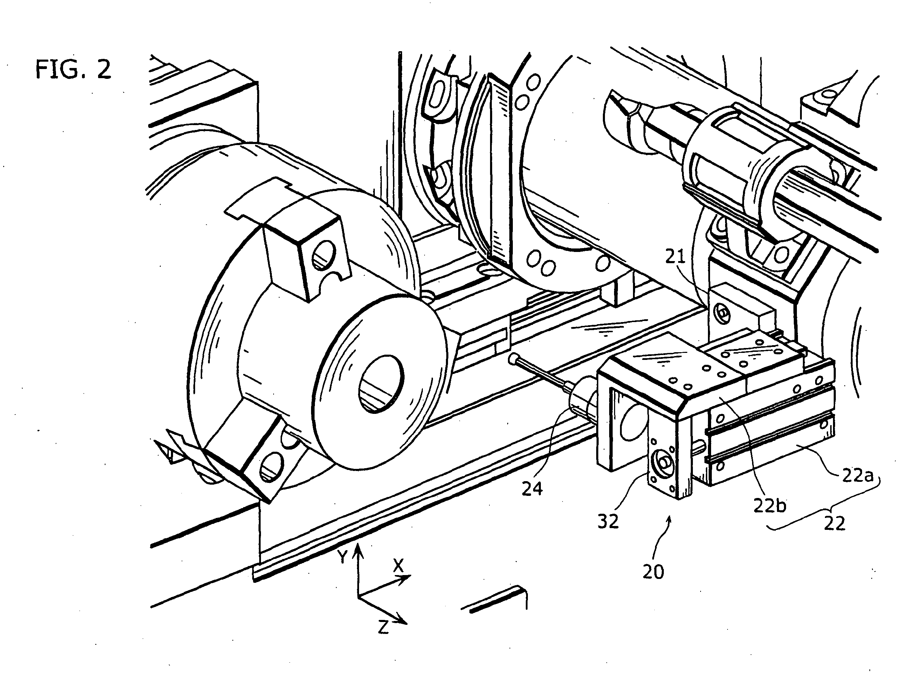

FIG. 2 is an enlarged perspective view showing the external appearance of the sensor module 20 in a retracted state according to Embodiment 1.

As FIG. 2 shows, the sensor module 20 includes: a base 21 mounted on the tool holding face 10; the support strut 22 extending radially of the turret tool post 7 from the base 21; and a sensor 24 fixed to the support strut 22 in a position for measurement.

The support strut 22 includes a strut leg 22a and a strut head 22b which are separated from each other. The strut leg 22a includes an actuator (not shown) having a movable part 32 that reciprocates along the direction in which the support strut 22 extends. The strut head 22b is mounted on the movable part 32 of the actuator.

The actuator causes the support strut 22 to extend and retract. More specifically, the entire sensor module 20 extends and retracts radially of the turret tool post 7.

The sensor 24 is held at an end of the support strut 22, which extends and retracts radially of the turret tool post 7, opposite to the other end on the tool holding face 10 side.

This allows extension and shortening of a sensor distance, that is, the distance between the tool holding face 10 and the sensor 24 along the radial direction of the turret tool post 7.

It should be noted that the support strut 22 and the actuator realize the distance-extension-and-shortening mechanism of the machine tool and sensor module of the present invention.

Further, in the present embodiment, an air cylinder is used as the actuator.
In some cases, the turret tool post 7 is supplied with air for blowing chips and so on. In such cases, the air supplied to the turret tool post 7 is used for driving the air cylinder. As a result, the sensor module 20 can be extended and retracted.

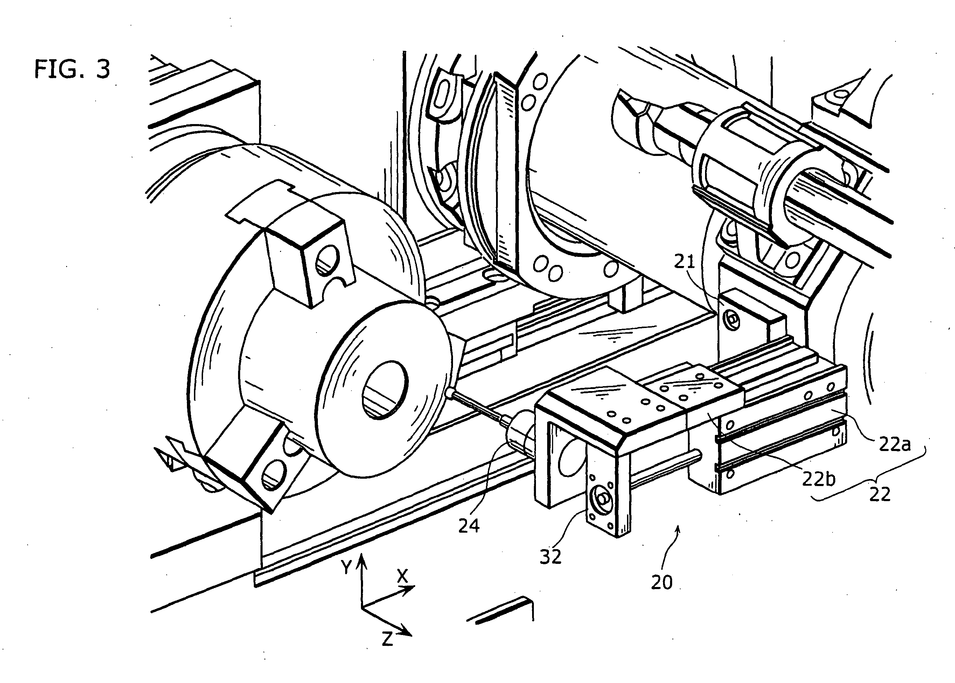

FIG. 3 is an enlarged perspective view showing the external appearance of the sensor module 20 in an extended state according to Embodiment 1.

As FIG. 3 shows, the extension of the support strut 22 leads to the extension of the entire sensor module 20.

The sensor 24 in the present embodiment is a touch sensor that detects a contact with an object.

The sensor 24 detects the positions of both ends of the diameter of the workpiece 12 through the movement of the turret tool post 7 with the sensor module 20 in the extended state.

The turret lathe 1 or a computer or the like connected to the turret lathe 1 calculates the difference between the positions of both ends of the diameter of the workpiece 12 detected in the above described manner, to obtain the diameter of the workpiece 12.

Such extension and retraction of the sensor module 20 and the movement and the like of the turret tool post 7 are controlled by a control unit included in the turret lathe 1.

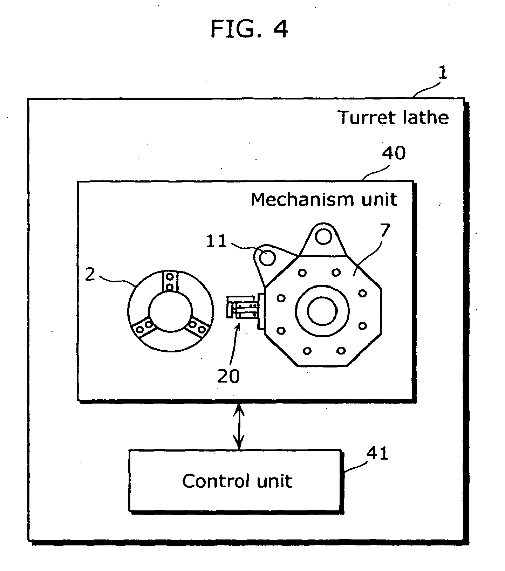

FIG. 4 is a block diagram showing the fundamental, functional structure of the turret lathe 1 according to Embodiment 1.

As FIG. 4 shows, the turret lathe 1 includes a mechanism unit 40 having the above described turret tool post 7 and others, and a control unit 41 as fundamental, functional structural elements.

The control unit 41 has a function to control operations of the mechanism unit 40.The mechanism unit 40 is embodied as, for example, a computer having elements such as a Central Processing Unit (CPU), a storage device, and an interface that inputs and outputs information.

For example, when the workpiece diameter is to be measured, the control unit 41 causes extension of the sensor module 20 from the retracted state, in the case where the turret tool post 7 is at a rotation position where the sensor 24 is on the workpiece side. The control unit 41 further causes a movement of the turret tool post 7 so that the distance between the sensor 24 and the workpiece varies.

In accordance with such control, the sensor module 20 extends and the turret tool post 7 moves, so that the positions of both ends of the workpiece diameter are measured.

It is to be noted that the operations of the control unit 41 can be programmed in such a manner that the measurement of the workpiece diameter is performed at a predetermined timing, e.g. before, during, or after machining the workpiece.

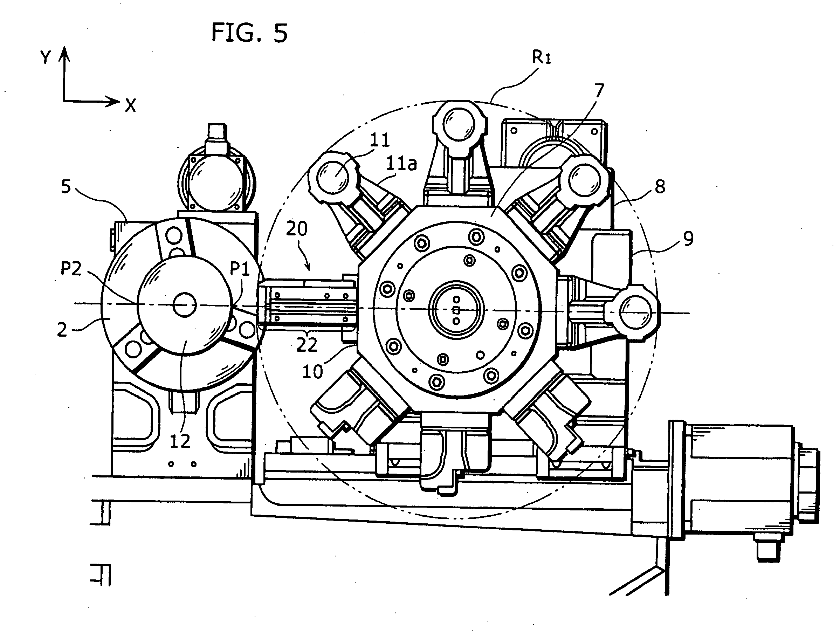

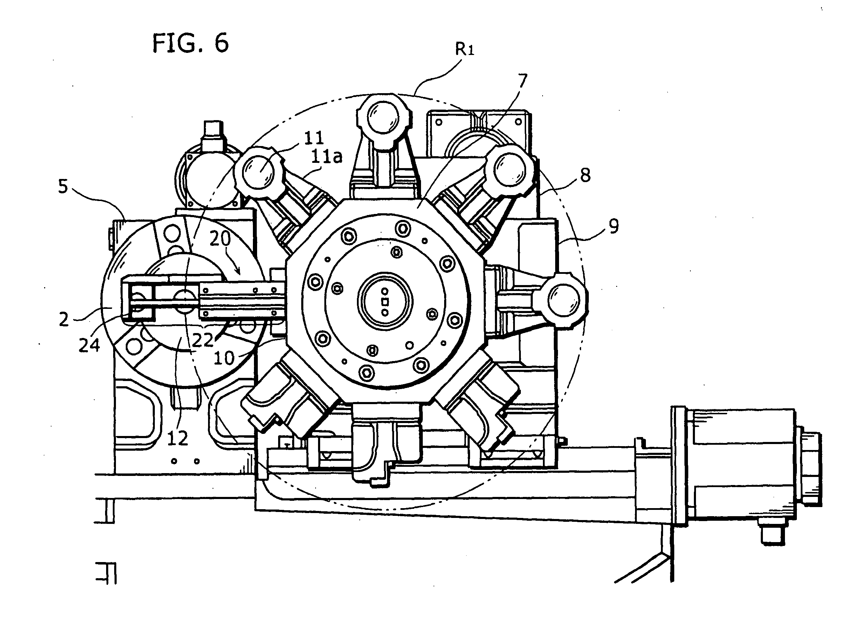

Next, with reference to FIGS. 5 and 6, the following shall describe an advantageous effect produced through the extension and retraction of the sensor module 20.

FIG. 5 is an enlarged elevation view showing the external appearance of the sensor module 20 in a retracted state according to Embodiment 1.

It is to be noted that two points P1 and P2 on the outer circumference of the workpiece 12 shown in FIG. 5 are on a plane that includes the rotation axis of the spindle 2 (i.e. the rotation axis of the workpiece 12) and the rotation axis of the turret tool post 7.In other words, the distance between P1 and P2 is the workpiece diameter.

In FIG. 5, the plane is represented by a straight line going through the rotation axis of the spindle 2 and the rotation axis of the turret tool post 7, and is parallel to the X-axis.

P1 is an example of a first end whose position is to be measured by the measuring method of the present invention, and P2 is an example of a second end.

As FIG. 5 shows, the length of the support strut 22 in the radial direction of the turret tool post 7 is such that the support strut 22 and the sensor 24 do not interfere with other structural elements of the turret lathe 1 when the turret tool post 7 rotates while the support strut 22 is retracted, that is, while the sensor distance is shortened. In other words, it is such a length that the entire sensor module 20 does not interfere with other structural elements.

For example, as long as the length of the support strut 22 in the retracted state is such that the support strut 22 and the sensor 24 fit in the maximum rotation radius (R₁) of the turret tool post 7 with tools held, the rotation of the turret tool post 7 does not cause interference between the sensor module 20 and other structural elements.

Therefore, when the support strut 22 is in the retracted state, that is, when the sensor distance is shortened, the turret tool post 7 can freely rotate for workpiece machining, tool replacement, and so on without being influenced by the sensor module 20.

As FIG. 5 shows, there may be a case where the sensor module 20 partially extends off R₁ when R₁ is specified as the distance between the rotation axis of the turret tool post 7 and the tip portion of the tool station 11a.

Even in such a case, there is no impact on the rotation of the turret tool post 7 as long as the sensor module 20 is in an area where the sensor module 20 does not interfere with other structural elements (non-interference area) when the turret tool post 7 rotates.

More specifically, the length of the support strut 22 in the retracted state is sufficient as long as the support strut 22 and the sensor 24 fit in the non-interference area.

To put it differently, the length of the support strut 22 when the sensor distance is shortened is sufficient as long as the rotation of the turret tool post 7 is not hindered.

Here, the turret tool post 7 can move in the X-axis direction to the extent that R₁ extends slightly beyond the rotation axis of the spindle 2.Therefore, even when the support strut 22 is retracted, it is still possible to measure the position of P1, which is closer to the turret tool post 7 compared with the other end of the diameter of the workpiece 12.

However, the position of P2, which is the other end of the diameter farther from the turret tool post 7, cannot be measured.

In view of the above circumstance, the turret lathe 1 of the present embodiment enables measurement of the P2 position using the sensor 24 through the extension of the support strut 22.

FIG. 6 is an enlarged elevation view showing the external appearance of the sensor module 20 in an extended state according to Embodiment 1.

As FIG. 6 shows, the sensor 24 is outside R₁ when the sensor module 20 extends radially of the turret tool post 7 through the extension of the support strut 22.

In such a manner, the sensor 24 can be positioned beyond the rotation axis of the spindle 2 through the extension of the sensor module 20 and the approach of the turret tool post 7 towards the spindle 2.In other words, the sensor 24 can be positioned on a side opposite to the turret tool post 7 with respect to the rotation axis of the spindle 2.

This enables the measurement of the P2 position, which is the farther end of the diameter of the workpiece 12 from the turret tool post 7 compared with the other end of the diameter.

For example, a case is assumed where the maximum diameter of workpieces that the spindle 2 can hold is approximately 100 mm. In such a case, when the support strut 22 is in the extended state and the sensor 24 is positioned 60 mm approximately outside R₁, the measurement of the P2 position using the sensor 24 is possible.

More specifically, while the sensor distance is extended, the length of the support strut 22 in the radial direction of the turret tool post 7 when a workpiece with the maximum diameter that the spindle 2 can hold is held is such that the sensor 24 can be positioned on a side opposite to the turret tool post 7 with the workpiece positioned in between.

With such a length of the support strut 22 in the extended state, the measurement of workpiece diameters is possible even when, for example, various sized workpieces are machined in succession.

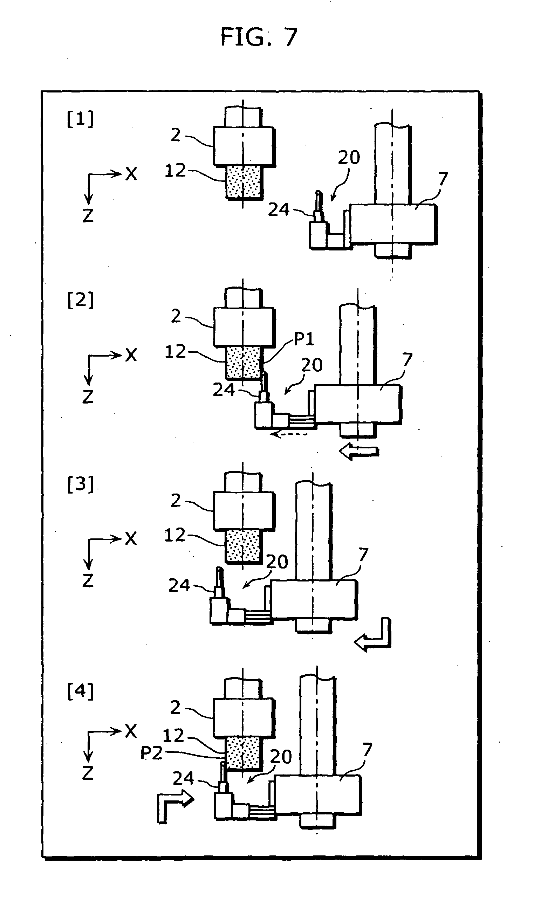

Next, with reference to FIG. 7, operations performed by the turret lathe 1 for measuring workpiece diameters shall be described.

FIG. 7 is a schematic diagram showing an example of operational flow for measuring, by the turret lathe 1 of Embodiment 1, the diameter of the workpiece 12.The series of operations shown in FIG. 7 is controlled by the above described control unit 41 through execution of a predetermined program.

First, the turret tool post 7 rotates so that the sensor module 20 is positioned on the workpiece 12 side.

The rotation position of the turret tool post 7 at this time is such that the sensor 24 is positioned on a straight line going through the rotation axis of the spindle 2 and the rotation axis of the turret tool post 7 (refer to FIG. 5).

Next, with the sensor distance extended, the turret tool post 7 moves towards the spindle 2 in a direction parallel to the X-axis. As a result of this movement, the sensor 24 detects a contact with the workpiece 12 to measure the P1 position.

Next, the turret tool post 7 moves towards the front in a direction parallel to the Z-axis (in the downward direction in FIG. 7). Furthermore, the turret tool post 7 moves in a direction (the left direction in FIG. 7) parallel to the X-axis and towards the side opposite to P1 with the rotation axis of the spindle 2 positioned in between. This movement brings the sensor 24 to a position beyond the workpiece 12.

Next, the turret tool post 7 moves towards the back in a direction parallel to the Z-axis (in the upward direction in FIG. 7). Furthermore, the turret tool post 7 moves in a direction parallel to the X-axis towards the spindle 2 (the right direction in FIG. 7). As a result of this movement, the sensor 24 detects a contact with the workpiece 12 to measure the P2 position.

Through such operations, the turret lathe 1 of the present embodiment can measure the diameter of the workpiece held by the spindle 2.

Specifically, the diameter can be measured through direct measurement of both ends of the workpiece diameter. Such direct measurement allows the diameter values to be accurately obtained.

Further, the sensor module 20 that performs such measurement is mounted on a tool holding face 10 of the turret tool post 7 in the same manner as a tool such as a tool bit.

That is to say, the sensor module 20 is mounted on the turret lathe 1 in such a manner that the space in the turret lathe 1 is not wastefully occupied, and that accurate measurement of workpiece diameters is possible.

Further, the sensor module 20 is retracted except for when the workpiece diameters are measured. Thus, the sensor module 20 does not hinder the rotation of the turret tool post 7.

Furthermore, the sensor module 20 can be developed independently. Thus, with a change in the shape, size or the like of the base 21, the sensor module 20 can be used in various turret lathes for in-machine measurement of workpiece dimensions.

As described above, the turret lathe 1 of the present embodiment is a machine tool capable of performing accurate measurement of workpiece diameters while achieving size reduction. Furthermore, the sensor module 20 of the present embodiment brings about such advantageous effects for a machine tool.

Although the turret lathe 1 has been described above as an example of the machine tool of the present invention, the present invention is not limited to the present embodiment.

Those skilled in the art will readily appreciate that many modifications are possible in the present embodiment without materially departing from the novel teachings and advantages of this invention. Accordingly, all such modifications are intended to be included within the scope of this invention.

For example, in the present embodiment, the workpiece dimensions measured by the sensor module 20 are the workpiece diameters, and are, to be more specific, the outer diameters of workpieces as shown in FIG. 7.

Further, other workpiece dimensions may be measured using the sensor module 20.For example, the bore diameter, that is, the diameter of a hole made by boring, may be measured using the sensor module 20.

As stated above, the sensor module 20 can position the sensor 24 on both ends of the outer diameter of a workpiece held by the spindle 2.That is to say, the sensor module 20 can position the sensor 24 on both ends of a workpiece inner diameter which is shorter than the outer diameter, and thus the value of the inner diameter can be accurately measured.

Moreover, in the present embodiment, an air cylinder is used to serve as an actuator. However, a solenoid or an electric motor may be used as an actuator.

Further, the sensor 24 may be other than a touch sensor; it may be a sensor that optically measures the shape, position, and so on of workpieces, or a sensor that measures a property value such as a temperature, instead of dimensions.

Moreover, examples of the machine tool having a turret tool post serving as a rotatable tool-selection mechanism include machining centers and so on, as well as turret lathes. Therefore, machine tools other than turret lathes also can measure the dimensions of objects to be machined, using the sensor module of the present invention.

### (Embodiment 2)

As Embodiment 2 of the present invention, a turret lathe 100 shall be described. The turret lathe 100 includes a sensor module 120 capable of extending and shortening the sensor distance through rotation of an arm 122 having the sensor 24 on its end.

The turret lathe 100 is another example of the machine tool of the present invention.

It is to be noted that the fundamental structure of the turret lathe 100 according to Embodiment 2 is the same as that of the turret lathe 1 of Embodiment 1.Thus, the following description shall center on the sensor module 120 which is a characteristic, structural element of the turret lathe 100 according to Embodiment 2.

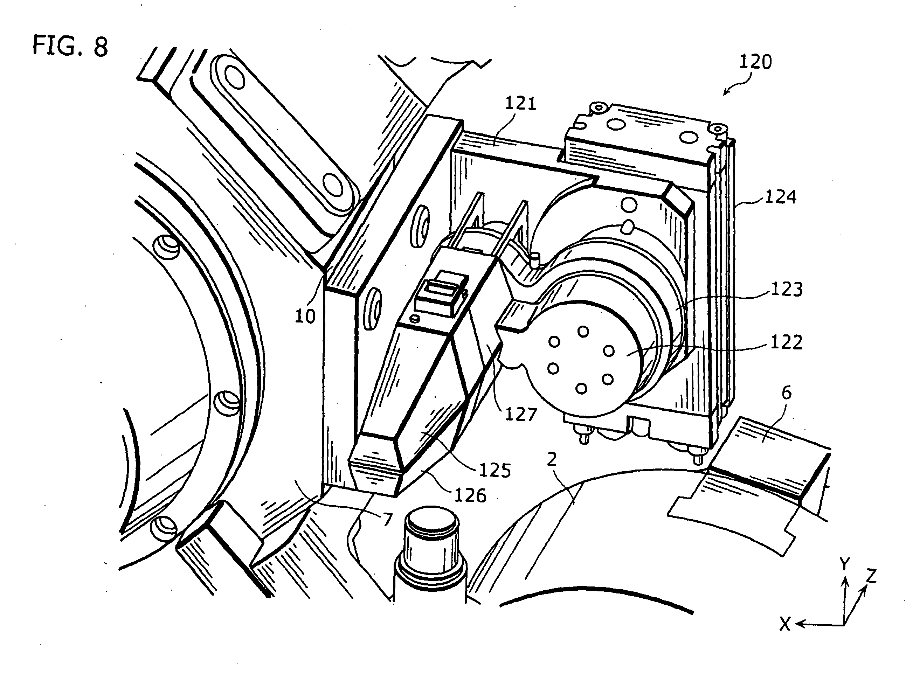

First, with reference to FIGS. 8 to 11, the fundamental structure of the sensor module 120 according to Embodiment 2 shall be described.

FIG. 8 is an enlarged perspective view showing the external appearance of the sensor module 120 according to Embodiment 2 of the present invention.

The sensor module 120 includes: a base 121; the arm 122 which is rotatably mounted on the base 121; a gearbox 123 that rotates together with the arm 122; a driving unit 124 that drives the arm 122 to rotate; a first cover piece 125 and a second cover piece 126 that cover the sensor 24 (not shown in FIG. 8); and a rear cover 127 mounted to the tip portion of the arm 122.

FIG. 8 shows the sensor module 120 with the sensor distance shortened by accommodating the arm 122 inward. From this state, the driving unit 124 can make the arm 122 rotate 180°.

The rotation of the arm 122 results in an extension of the distance between the sensor 24 held at the tip portion of the arm 122 and the tool holding face 10.

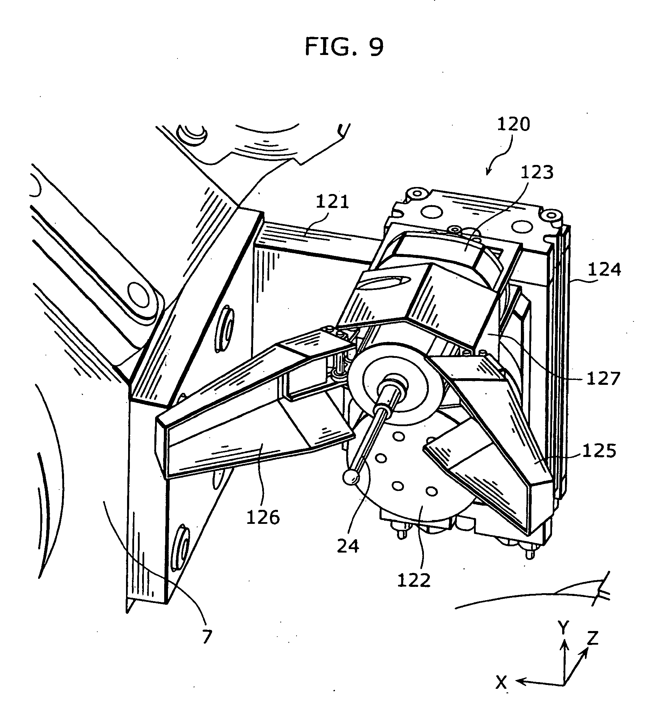

FIG. 9 is an enlarged perspective view showing the external appearance of the sensor module 120 with the arm 122 rotated 90° from the state shown in FIG. 8.

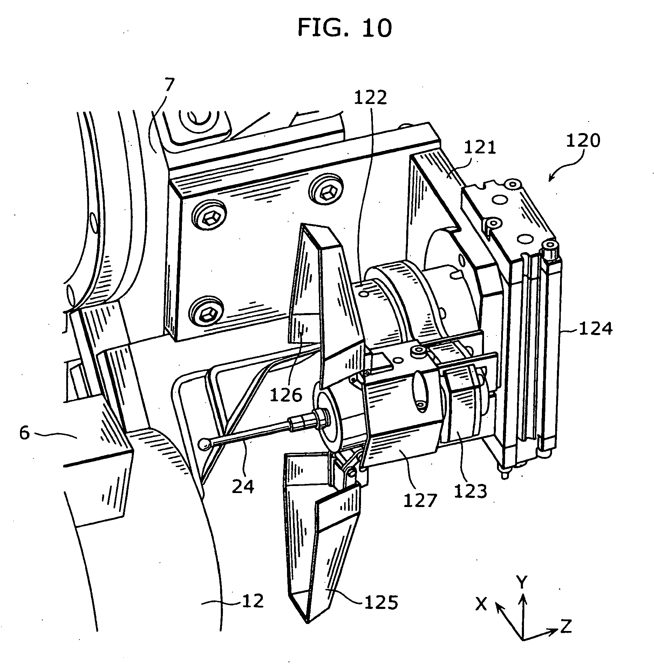

FIG. 10 is an enlarged perspective view showing the external appearance of the sensor module 120 with the arm 122 further rotated 90° from the state shown in FIG. 9.

As FIG. 9 shows, with the rotation of the arm 122, the first cover piece 125 and the second cover piece 126 open.

Further, as FIG. 10 shows, when the arm 122 rotates 180° from the state shown in FIG. 8, the sensor distance is extended, and the first cover piece 125 and the second cover piece 126 completely open.

As described, the sensor module 120 rotates the arm 122 to bring the sensor 24 to a position, in the radial direction of the turret tool post 7, away from the tool holding face 10.In other words, the sensor module 120 can extend the sensor distance.

The extension of the sensor distance enables direct measurement of both ends of the workpiece diameter using the sensor 24.

It is to be noted that the driving unit 124 is structured with an air cylinder and a rack and pinion, for example, and is capable of rotating the arm 122 using the air cylinder serving as a driving source.

Further, when an air cylinder is used for the driving unit 124, the air supplied to the turret tool post 7 for blowing chips, for example, can be used as described above.

The arm 122 together with the driving unit 124 realizes the distance-extending-and-shortening mechanism of the machine tool and sensor module of the present invention.

When the arm 122 rotates 180° in the opposite direction from the state shown in FIG. 10, the sensor distance is shortened, and the first cover piece 125 and the second cover piece 126 close as shown in FIG. 8.

In the present embodiment, such opening and closing operation of the first cover piece 125 and the second cover piece 126 is achieved through the gearbox 123 and a link mechanism. Detailed description of the link mechanism shall be provided later.

It is to be noted that when the sensor module 120 is in a state where the sensor distance is shortened, the length of the sensor module 120 in the radial direction of the turret tool post 7 is such that the sensor module 120 does not interfere with other structural elements of the machine tool.

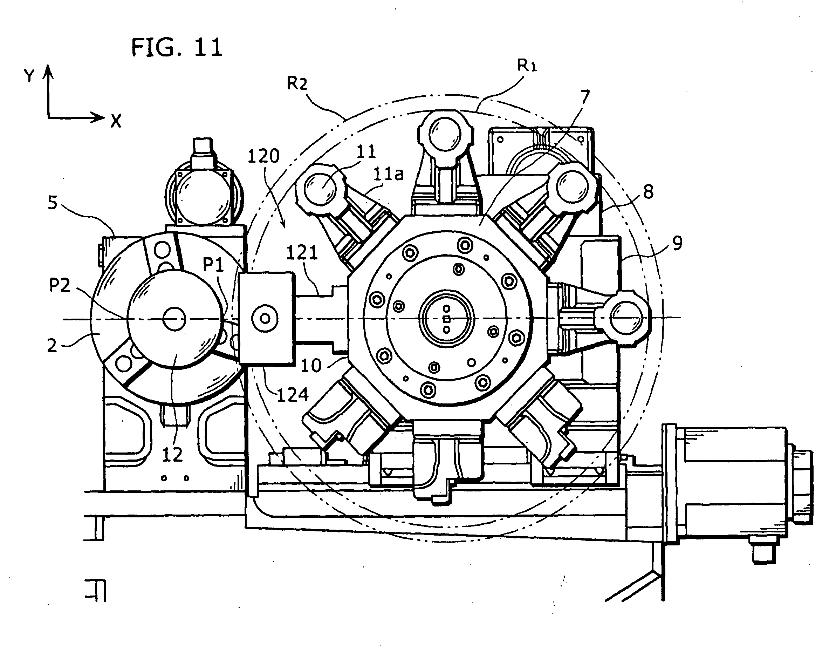

FIG. 11 is an enlarged elevation view showing the external appearance of the sensor module 120 with the sensor distance shortened according to Embodiment 2.

As FIG. 11 shows, in the present embodiment, when the sensor module 120 is in a state where the sensor distance is shortened, the sensor module 120 partially extends off the above mentioned maximum rotation radius R₁.

However, because the sensor module 120 is within a non-interference area (circle denoted by R₂ in FIG. 11), the sensor module 120 does not hinder the turret tool post 7 from rotating.

As described, in the same manner as the sensor module 20 of Embodiment 1, the sensor module 120 of Embodiment 2 is mounted on the turret tool post 7 in such a manner that the rotation of the turret tool post 7 is not hindered.

Further, when the sensor module 120 is at a cutting position on the workpiece side, the arm 122 rotates so that the sensor distance is extended. This allows the direct measurement of the workpiece diameter.

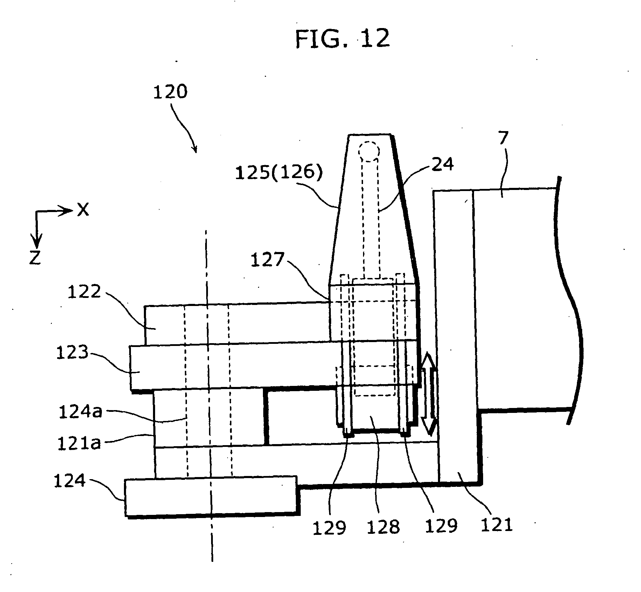

Next, with reference to FIGS. 12 to 18, the structure and operations of the sensor module 120 of Embodiment 2 shall be described.

FIG. 12 is a plan view showing the structure of the sensor module 120 according to Embodiment 2.

As FIG. 12 shows, the sensor module 120 includes a cam 128 and slide members 129 as well as other structural elements such as the above described arm 122.

The driving unit 124 includes a drive shaft 124a parallel to the rotation axis of the turret tool post 7, that is, parallel to the Z-axis.

The arm 122 is joined to the drive shaft 124a, and the driving unit 124 is capable of rotating the arm 122 through the drive shaft 124a.

The gearbox 123 mounted to the arm 122 rotates together with the arm 122.With this rotation, gears in the gearbox 123 rotate, causing the cam 128 to move along the direction parallel to the Z-axis.

Such movement of the cam 128 causes the slide members 129, which are joined to the cam 128, to move along the same direction.

It is to be noted that the slide members 129 can slide with respect to the arm 122 and the gearbox 123 only along the direction parallel to the Z-axis direction. Therefore, the cam 128 joined to the slide members 129 does not rotate with respect to the arm 122 and the gearbox 123.

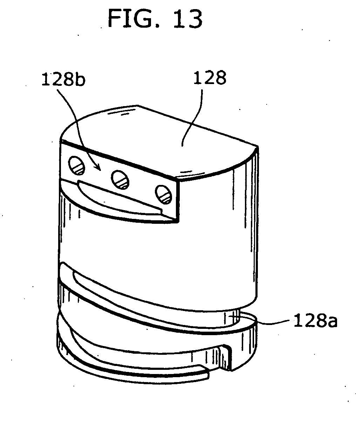

FIG. 13 is a perspective view showing the external appearance of the cam 128.
The cam 128 includes: a cam groove 128a with which a protrusion on the inner circumference of a gear in the gearbox 123 engages and along which the protrusion slides; and a slide member attachment portion 128b at which the slide members 129 are attached.

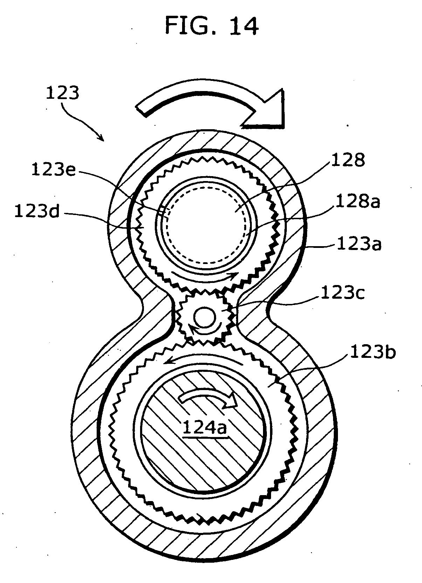

FIG. 14 is a diagram showing an overview of the inner structure of the gearbox 123.
As FIG. 14 shows, the gearbox 123 includes a gearcase 123a, a first gear 123b, a second gear 123c, and a third gear 123d.

Out of the three gears, only the first gear 123b does not rotate with respect to the base 121.More specifically, the first gear 123b is fixed to a cylinder 121a (refer to FIG. 12) of the base 121.

Therefore, when the gearbox 123 rotates around the drive shaft 124a, the first gear 123b rotates relative to the gearcase 123a.

Further, a protrusion 123e is formed on the inner circumference of the third gear 123d, and the protrusion engages with the cam groove 128a of the cam 128 inserted in a hole formed inward of the third gear 123d. The direction of the cam groove 128a is slant with respect to the rotating face of the third gear 123d.

In this structure, when the third gear 123d rotates, the cam 128 that does not rotate with respect to the gearbox 123 moves along the direction parallel to the Z-axis, that is, the direction towards the rear or front of FIG. 14.

For example, with a clockwise rotation of the drive shaft 124a as shown in FIG. 14, the gearbox 123 also rotates in the same direction.

At this time, the first gear 123b fixed to the base 121 rotates counterclockwise with respect to the gearcase 123a.

The rotating force of the first gear 123b is transmitted to the third gear 123d through the second gear 123c, causing the third gear 123d to rotate counterclockwise. As a result, the cam 128 moves along the direction parallel to the Z-axis.

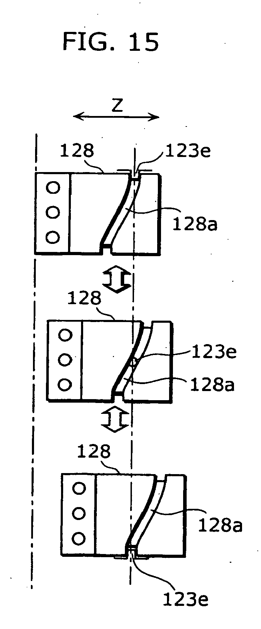

FIG. 15 is a schematic diagram showing how the cam 128 moves.

As FIG. 15 shows, the protrusion 123e moves along the direction perpendicular to the Z-axis while tracing the cam groove 128a. As a result, the cam 128 moves along the direction parallel to the Z-axis.

For example, when the left side of FIG. 15 is assumed to be the rear of FIG. 14, the clockwise rotation of the gearbox 123 causes the third gear 123d to rotate counterclockwise. As a result, the cam 128 moves towards the front of FIG. 14 (right in FIG. 15).

On the other hand, the counterclockwise rotation of the gearbox 123 causes the cam 128 to move towards the rear of FIG. 14 (left in FIG. 15).

With such movement of the cam 128, the slide members 129 move, causing the first cover piece 125 and the second cover piece 126 to open and close through the link mechanism.

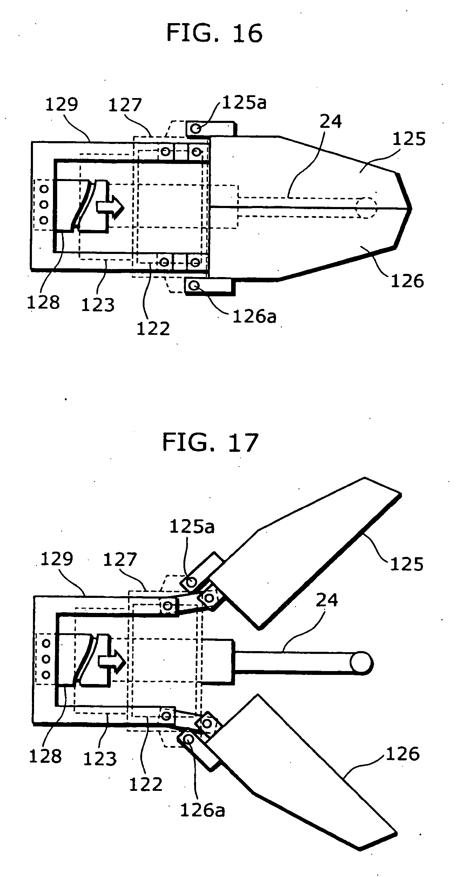

FIG. 16 is a diagram showing the closed states of the first cover piece 125 and the second cover piece 126.

As FIG. 16 shows, the first cover piece 125 is rotatably joined with the rear cover 127 through a first pin 125a, and rotates around the first pin 125a that serves as a rotation axis.

Further, the second cover piece 126 is rotatably joined with the rear cover 127 through a second pin 126a, and rotates around the second pin 126a that serves as a rotation axis.

Both the first cover piece 125 and the second cover piece 126 are joined with the slide members 129 through a link.

When the cam 128 moves from the state shown in FIG. 16 towards the sensor 24, that is, towards the right side of FIG. 16, the slide members 129 also move to the right.

The right movement of the slide members 129 causes the first cover piece 125 to rotate upward of FIG. 16 through the link mechanism. Further, the second cover piece 126 is caused to rotate downward. In other words, the first cover piece 125 and the second cover piece 126 rotate in order to open.

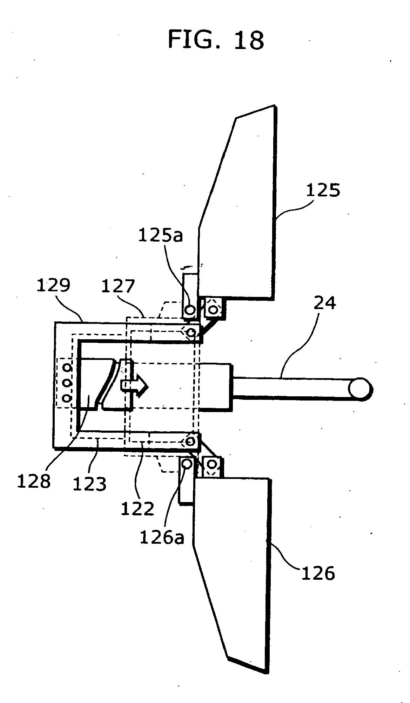

As described, with the right movement of the cam 128, the first cover piece 125 and the second cover piece 126 gradually open to reach their states shown in FIG. 18 through the states shown in FIG. 17.

FIG. 17 is a diagram showing the states of the first cover piece 125 and the second cover piece 126 before they are completely open, and FIG. 18 shows their states when they are completely open.

As FIG. 18 shows, since both the first cover piece 125 and the second cover piece 126 rotate only 90° approximately, these cover pieces do not hinder the measurement of workpiece dimensions by the sensor 24.

In addition, even when dust such as chips exists in the cover pieces, it can be removed to the outside of the cover pieces. In other words, it is possible to prevent dust accumulation inside the cover pieces.

It is to be noted that a left movement of the cam 128 from the state shown in FIG. 18 causes the first cover piece 125 and the second cover piece 126 to return to their states shown in FIG. 16.

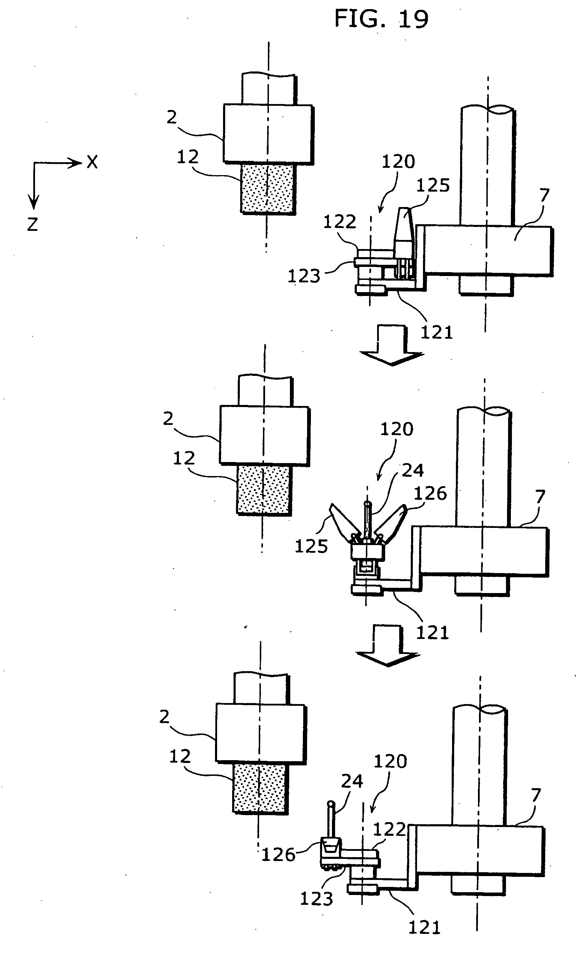

FIG. 19 is a diagram showing a flow of operations of the sensor module 120 performed when the first cover piece 125 and the second cover piece 126 are opening.

It is to be noted that the top part of FIG. 19 corresponds to FIG. 16, the middle part to FIG. 17, and the bottom part to FIG. 18.

The top part of FIG. 19 shows the state where the sensor distance is the shortest. The 90° rotation of the arm 122 from this state leads to the state shown in the middle part of FIG. 19. The further 90° rotation of the arm 122 leads to the state shown in the bottom part of FIG. 19.

In such a manner, the rotation of the arm 122 causes the first cover piece 125 and the second cover piece 126 to gradually open through the above described link mechanism.

As shown in the bottom part of FIG. 19, when the sensor distance is extended, the arm 122 stops rotating to allow the measurement of the dimensions of the workpiece 12 to start.

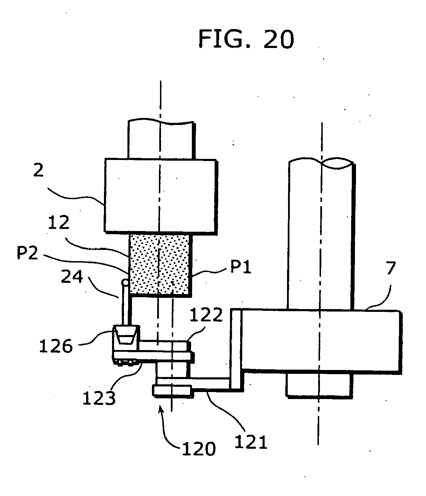

FIG. 20 is a diagram showing an example of a positional relationship between the sensor module 120 and the workpiece 12 at the time of measuring the diameter of the workpiece 12.

As FIG. 20 shows, when the arm 122 rotates to cause the sensor distance to extend, the measurement is possible not only of the P1 position closer to the turret tool post 7 compared with the P2 position, but also of the P2 position farther to the turret tool post 7.In other words, the direct measurement of the diameter of the workpiece 12 is possible.

The movement of the turret tool post 7 at the time of measurement of the diameter of the workpiece 12 is the same as that shown in FIG. 7.

More specifically, with the sensor distance extended, the turret tool post 7 repeats the movement towards the direction parallel to the X-axis and the movement towards the direction parallel to the Z-axis, so that the P1 and P2 positions are measured.

It is to be noted that as with the extension and retraction of the support strut 22, for example, of Embodiment 1, the rotation of the arm 122 and the movement of the turret tool post 7 are controlled by the control unit 41.

Through such operations, the turret lathe 100 of Embodiment 2 directly measures the diameter of the workpiece held by the spindle 2, in the same manner as the turret lathe 1 of Embodiment 1.Such direct measurement allows the diameter values to be accurately obtained.

Further, as with the sensor module 20 of Embodiment 1, the sensor module 120 of Embodiment 2 neither wastefully occupies the space in the turret lathe 100 nor hinders the rotation of the turret tool post 7.

Furthermore, the arm 122 rotates to extend the sensor distance only when necessary, in order to allow the direct measurement of the workpiece dimensions.

Furthermore, the sensor module 120 can also be developed independently. Thus, with a change in the shape, size or the like of the base 121, the sensor module 120 can be used in various turret lathes for in-machine measurement of workpiece dimensions.

As described above, the turret lathe 100 of Embodiment 2 is a machine tool capable of performing accurate measurement of workpiece diameters while achieving size reduction. Furthermore, the sensor module 120 of the present embodiment brings about such advantageous effects for a machine tool.

In the present embodiment, the drive shaft 124a serving as the rotation axis of the arm 122 of the sensor module 120 is parallel to the rotation axis of the turret tool post 7.However, the drive shaft 124a may be oriented to a different direction.

That is to say, the drive shaft 124a may be oriented to any direction as long as the rotation of the arm 122 does not hinder the rotation of the turret tool post 7 but allows the extension and shortening of the sensor distance to enable the direct measurement of the diameter of a target workpiece.

Further, workpiece dimensions other than diameters may be measured using the sensor module 120.For example, the bore diameter, that is, the diameter of a hole made by boring, may be measured.

Further, the driving source of the driving unit 124 may be a solenoid or an electric motor, instead of the air cylinder.

Further, the sensor 24 may be other than a touch sensor; it may be a sensor that optically measures the shape, position, and so on of workpieces. Furthermore, the sensor 24 may be a sensor that measures a property value such as a temperature, instead of dimensions.

Moreover, a machine tool other than a turret lathe can measure the dimensions of workpieces to be machined, using the sensor module 120 of Embodiment 2.

Although only some exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention, as defined by the claims.

### INDUSTRIAL APPLICABILITY

The machine tool according to the present invention can be widely used as a machine tool, such as a turret lathe and a machining center, having a turret serving as a tool-selection mechanism.

Furthermore, the sensor module according to the present invention can be widely used as a mechanism for measuring dimensions of workpieces in a machine tool having a turret serving as a tool-selection mechanism.

## Claims

1. A machine tool for machining a workpiece (12) held by a spindle (2), said machine tool comprising:
a turret tool post (7) having tool holding faces (10) and a sensor (24) for measuring dimensions of the workpiece, **characterized in that**, said machine tool further comprises:
a distance-extending-and-shortening mechanism (22, 122, 124) mounted on one of said tool holding faces, said distance-extending-and-shortening mechanism holding said sensor (24) and extending and shortening a sensor distance which is a distance between the one of said tool holding faces and said sensor (24) in a radial direction of said turret tool post (7),
wherein, while the sensor distance is shortened, a length of said distance-extending-and-shortening mechanism (22, 122, 124) in the radial direction is such that said distance-extending-and-shortening mechanism (22, 122, 124) and said sensor (24) do not interfere with another structural element of said machine tool when said turret tool post (7) rotates.

2. The machine tool according to Claim 1,
wherein said distance-extending-and-shortening mechanism (22, 122, 124) includes an arm which rotationally moves, said distance-extending-and-shortening mechanism (22, 122, 124) extending and shortening the sensor distance through a rotational movement of said arm with said sensor (24) held on an end of said arm.

3. The machine tool according to Claim 1,
wherein said distance-extending-and-shortening mechanism (22, 122, 124) includes a support strut which extends and retracts in the radial direction, said distance-extending-and-shortening mechanism (22, 122, 124) extending and shortening the sensor distance through extension and retraction of said support strut with said sensor (24) held on an end of said support strut, the end being on a side opposite to the one of said tool holding faces (10).

4. The machine tool according to Claim 1,
wherein, while the sensor distance is extended, the length of said distance-extending-and-shortening mechanism (22, 122, 124) in the radial direction when a workpiece (12) with a maximum diameter that the spindle (2) can hold is held by the spindle (2) is such that said sensor (24) is positioned on a side opposite to said turret tool post (7) with the workpiece (12) positioned in between, and
said sensor (24) detects positions of both ends of a diameter of the workpiece (12) through a movement of said turret tool post (7) while the sensor distance is extended by said distance-extending-and-shortening mechanism (22, 122, 124), the ends of the diameter being on a plane which includes a rotation axis of said turret tool post (7) and a rotation axis of the spindle (2).

5. The machine tool according to Claim 4, further comprising
a control unit (41) configured to: cause said distance-extending-and-shortening mechanism (22, 122, 124) to extend the sensor distance; and move said turret tool post (7) so that a distance between said sensor (24) and the workpiece (12) varies, when said turret tool post (7) is at a rotation position at which said sensor (24) is on a side towards the workpiece (12).

6. A method for measuring a diameter of a workpiece (12) using a sensor (24), said method being for use in a machine tool that machines, with a tool held by a turret tool post (7), the workpiece (12) held by a spindle (2),
wherein said turret tool post (7) has tool holding faces (10) on one of which a distance-extending-and-shortening mechanism (22, 122, 124) is mounted, the distance-extending-and-shortening mechanism (22, 122, 124) holding the sensor (24) and extending and shortening a sensor distance which is a distance between the one of the tool holding faces (10) and the sensor (24) in a radial direction of the turret tool post (7), and
said method comprises:
rotating the turret tool post (7) so that the sensor (24) is positioned on a side towards the workpiece (12);
extending the sensor distance, performed by the distance-extending-and-shortening mechanism (22, 122, 124);
measuring a position of a first end using the sensor (24) by moving the turret tool post (7) while the sensor distance is extended, the first end being closer to the turret tool post (7) than a second end is, the first end and the second end being both ends of the diameter of the workpiece (12) and positioned on a plane which includes a rotation axis of the turret tool post (7) and a rotation axis of the spindle (2); and
measuring a position of the second end using the sensor (24) by moving the turret tool post (7) while the sensor distance is extended.

7. The method according to Claim 6,
wherein the distance-extending-and-shortening mechanism (22, 122, 124) includes an arm which rotationally moves and has an end by which the sensor (24) is held, and
in said extending, the sensor distance is extended through a rotational movement of the arm.

8. The method according to Claim 6,
wherein the distance-extending-and-shortening mechanism (22, 122, 124) includes a support strut which is extensible, the support strut having an end by which the sensor (24) is held, the end being opposite to another end on a side towards the one of the tool holding faces (10), and
in said extending, the sensor distance is extended through extension of the support strut.

9. A computer program recorded on a computer-readable recording medium for controlling an operation of a machine tool that machines a workpiece (12) held by a spindle (2),
wherein the machine tool includes:
a turret tool post (7) having tool holding faces (10), **characterized in that**, said machine tool further includes,
a sensor (24) for measuring dimensions of the workpiece (12); and
a distance-extending-and-shortening mechanism (22, 122, 124) mounted on one of the tool holding faces (10), the distance-extending-and-shortening mechanism (22, 122, 124) holding the sensor (24) and extending and shortening a sensor distance which is a distance between the one of the tool holding faces and the sensor (24) in a radial direction of the turret tool post (7), and
said computer program causes a computer to execute:
rotating the turret tool post (7) so that the sensor (24) is positioned on a side towards the workpiece (12);
extending the sensor distance, performed by the distance-extending-and-shortening mechanism (22, 122, 124);
measuring a position of a first end using the sensor (24) by moving the turret tool post (7) while the sensor distance is extended, the first end being closer to the turret tool post (7) than a second end is, the first end and the second end being both ends of the diameter of the workpiece (12) and positioned on a plane which includes a rotation axis of the turret tool post (7) and a rotation axis of the spindle (2); and
measuring a position of the second end using the sensor (24) by moving the turret tool post (7) while the sensor distance extended.

## Patentansprüche

1. Werkzeugmaschine zum Bearbeiten eines Werkstücks (12), das von einer Spindel (2) gehalten wird, wobei die Werkzeugmaschine umfasst:
einen Revolver-Werkzeughalter (7) mit Werkzeughalteflächen (10) und einem Sensor (24) zum Messen von Abmessungen des Werkstücks, **dadurch gekennzeichnet, dass** die Werkzeugmaschine des Weiteren umfasst:
einen Mechanismus (22, 122, 124) zum Verlängern und Verkürzen von Abstand, der an einer der Werkzeughalteflächen angebracht ist, wobei der Mechanismus zum Verlängern und Verkürzen von Abstand den Sensor (24) hält und einen Sensor-Abstand verlängert und verkürzt, der ein Abstand zwischen der einen der Werkzeughalteflächen und dem Sensor (24) in einer radialen Richtung des Revolver-Werkzeughalters (7) ist,
wobei, wenn der Sensor-Abstand verkürzt wird, eine Länge des Mechanismus (22, 122, 124) zum Verlängern und Verkürzen von Abstand in der radialen Richtung so ist, dass der Mechanismus (22, 122, 124) zum Verlängern und Verkürzen von Abstand und der Sensor (24) kein anderes strukturelles Element der Werkzeugmaschine behindern, wenn sich der Revolver-Werkzeughalter (7) dreht.

2. Werkzeugmaschine nach Anspruch 1,
wobei der Mechanismus (22, 122, 124) zum Verlängern und Verkürzen von Abstand einen Arm enthält, der sich drehend bewegt, und der Mechanismus (22, 122, 124) zum Verlängern und Verkürzen von Abstand den Sensor-Abstand über eine Drehbewegung des Arms verlängert und verkürzt, wobei der Sensor (24) an einem Ende des Arms gehalten wird.

3. Werkzeugmaschine nach Anspruch 1,
wobei der Mechanismus (22, 122, 124) zum Verlängern und Verkürzen von Abstand eine Stützstrebe enthält, die in der radialen Richtung ausfährt und einfährt, der Mechanismus (22, 122, 124) zum Verlängern und Verkürzen von Abstand den Sensor-Abstand über Ausfahren und Einfahren der Stützstrebe verlängert und verkürzt, der Sensor (24) an einem Ende der Stützstrebe gehalten wird und sich das Ende an einer der einen der Werkzeughalteflächen (10) gegenüberliegenden Seite befindet.

4. Werkzeugmaschine nach Anspruch 1,
wobei, wenn der Sensor-Abstand verlängert wird, die Länge des Mechanismus (22, 122, 124) zum Verlängern und Verkürzen von Abstand in der radialen Richtung, wenn ein Werkstück (12) mit einem maximalen Durchmesser, den die Spindel (2) aufnehmen kann, von der Spindel (2) aufgenommen wird, so ist, dass der Sensor (24) an einer dem Revolver-Werkzeughalter (7) gegenüberliegenden Seite positioniert ist und das Werkstück (12) dazwischen positioniert ist, und
der Sensor (24) Positionen beider Enden eines Durchmessers des Werkstücks (12) über eine Bewegung des Revolver-Werkzeughalters (7) erfasst, wenn der Sensor-Abstand durch den Mechanismus (22, 122, 124) zum Verlängern und Verkürzen von Abstand verlängert wird, und die Enden des Durchmessers auf einer Ebene liegen, die eine Drehachse des Revolver-Werkzeughalters (7) und eine Drehachse der Spindel (2) einschließt.

5. Werkzeugmaschine nach Anspruch 4, die des Weiteren umfasst:
eine Steuereinheit (41), die so konfiguriert ist, dass sie bewirkt, dass der Mechanismus (22, 122, 124) zum Verlängern und Verkürzen von Abstand den Sensor-Abstand verlängert, und den Revolver-Werkzeughalter (7) so bewegt, dass ein Abstand zwischen dem Sensor (24) und dem Werkstück (12() variiert, wenn sich der Revolver-Werkzeughalter (7) an einer Drehposition befindet, an der sich der Sensor (24) an einer Seite in Richtung des Werkstücks (12) befindet.

6. Verfahren zum Messen eines Durchmessers eines Werkstücks (12) unter Verwendung eines Sensors (24), wobei das Verfahren zum Einsatz in einer Werkzeugmaschine bestimmt ist, die das von einer Spindel (2) gehaltene Werkstück (12) mit einem Werkzeug bearbeit, das von einem Revolver-Werkzeughalter (7) gehalten wird,
wobei der Revolver-Werkzeughalter (7) Werkzeughalteflächen (10) aufweist, an einer von ihnen ein Mechanismus (22, 122, 124) zum Verlängern und Verkürzen von Abstand angebracht ist und der Mechanismus (22, 122, 124) zum Verlängern und Verkürzen von Abstand den Sensor (24) hält und einen Sensor-Abstand verlängert und
verkürzt, der ein Abstand zwischen der einen der Werkzeughalteflächen (10) und dem Sensor in einer radialen Richtung des Revolver-Werkzeughalters (7) ist, und das Verfahren umfasst:
Drehen des Revolver-Werkzeughalters (7), so dass der Sensor (24) an einer Seite in Richtung des Werkstücks (12) positioniert wird;
Verlängern des Sensor-Abstandes, das durch den Mechanismus (22, 122, 124) zum Verlängern und Verkürzen von Abstand durchgeführt wird;
Messen einer Position eines ersten Endes unter Verwendung des Sensors (24), indem der Revolver-Werkzeughalter (7) bewegt wird und dabei der Sensor-Abstand verlängert wird, wobei das erste Ende näher an dem Revolver-Werkzeughalter (7) liegt als ein zweites Ende, das erste Ende und das zweite Ende beide Enden des Durchmessers des Werkstücks (12) sind und auf einer Ebene positioniert sind, die eine Drehachse des Revolver-Werkzeughalters (7) und eine Drehachse der Spindel (2) einschließt; und
Messen einer Position des zweiten Endes unter Verwendung des Sensors (24) durch Bewegen des Revolver-Werkzeughalters (7), während der Sensor-Abstand verlängert wird.

7. Verfahren nach Anspruch 6,
wobei der Mechanismus (22, 122, 124) zum Verlängern und Verkürzen von Abstand einen Arm enthält, der sich drehend bewegt und ein Ende hat, mit dem der Sensor (24) gehalten wird, und
bei dem Verlängern der Sensor-Abstand über eine Drehbewegung des Arms verlängert wird.

8. Verfahren nach Anspruch 6,
wobei der Mechanismus (22, 122, 124) zum Verlängern und Verkürzen von Abstand eine Stützstrebe enthält, die ausgefahren werden kann, die Stützstrebe ein Ende hat, mit dem der Sensor (24) gehalten wird, und das Ende einem anderen Ende an einer Seite in Richtung der einen der Werkzeughalteflächen (10) gegenüberliegt, und bei dem Verlängern der Sensor-Abstand über Ausfahren der Stützstrebe verlängert wird.

9. Computerprogramm, das auf einem computerlesbaren Aufzeichnungsmedium aufgezeichnet ist und mit dem eine Funktion einer Werkzeugmaschine gesteuert wird, die ein von einer Spindel (2) gehaltenes Werkstück (12) verarbeitet,
wobei die Werkzeugmaschine enthält:
einen Revolver-Werkzeughalter (7) mit Werkzeughalteflächen (10), **dadurch gekennzeichnet, dass** die Werkzeugmaschine des Weiteren enthält:
einen Sensor (24) zum Messen von Abmessungen des Werkstücks,:
einen Mechanismus (22, 122, 124) zum Verlängern und Verkürzen von Abstand, der an einer der Werkzeughalteflächen (10) angebracht ist, wobei der Mechanismus (22, 122, 124) zum Verlängern und Verkürzen von Abstand den Sensor (24) hält und einen Sensor-Abstand verlängert und verkürzt, der ein Abstand zwischen der einen der Werkzeughalteflächen und dem Sensor (24) in einer radialen Richtung des Revolver-Werkzeughalters (7) ist, und
wobei das Computerprogramm einen Computer veranlasst, folgende Vorgänge auszuführen:
Drehen des Revolver-Werkzeughalters (7), so dass der Sensor (24) an einer Seite in Richtung des Werkstücks (12) positioniert wird;
Verlängern des Sensor-Abstandes, das durch den Mechanismus (22, 122, 124) zum Verlängern und Verkürzen von Abstand durchgeführt wird;
Messen einer Position eines ersten Endes unter Verwendung des Sensors (24), indem der Revolver-Werkzeughalter (7) bewegt wird und dabei der Sensor-Abstand verlängert wird, wobei das erste Ende näher an dem Revolver-Werkzeughalter (7) liegt als ein zweites Ende, das erste Ende und das zweite Ende beide Enden des Durchmessers des Werkstücks (12) sind und auf einer Ebene positioniert sind, die eine Drehachse des Revolver-Werkzeughalters (7) und eine Drehachse der Spindel (2) einschließt; und
Messen einer Position des zweiten Endes unter Verwendung des Sensors (24) durch Bewegen des Revolver-Werkzeughalters (7), während der Sensor-Abstand verlängert wird.

## Revendications

1. Machine-outil d'usinage d'une pièce (12) maintenue par une broche (2), ladite machine-outil comprenant :
un porte-outil à tourelle (7) ayant des faces de maintien d'outil (10) et un capteur (24) pour mesurer des dimensions de la pièce, **caractérisée en ce que** ladite machine-outil comprend en outre :
un mécanisme d'augmentation et de réduction de distance (22, 122, 124) monté sur l'une desdites faces de maintien d'outil, ledit mécanisme d'augmentation et de réduction de distance maintenant ledit capteur (24) et augmentant et réduisant une distance de capteur qui est une distance entre l'une desdites faces de maintien d'outil et ledit capteur (24) dans une direction radiale dudit porte-outil à tourelle (7),
dans laquelle, pendant que la distance de capteur est réduite, une longueur dudit mécanisme d'augmentation et de réduction de distance (22, 122, 124) dans la direction radiale est telle que ledit mécanisme d'augmentation et de réduction de distance (22, 122, 124) et ledit capteur (24) n'interfèrent pas avec un autre élément structurel de ladite machine-outil lorsque ledit porte-outil à tourelle (7) tourne.

2. Machine-outil selon la revendication 1,
dans laquelle ledit mécanisme d'augmentation et de réduction de distance (22, 122, 124) comprend un bras qui se déplace de manière rotationnelle, ledit mécanisme d'augmentation et de réduction de distance (22, 122, 124) augmentant et réduisant la distance de capteur par le biais d'un mouvement rotationnel dudit bras avec ledit capteur (24) maintenu sur une extrémité dudit bras.

3. Machine-outil selon la revendication 1,
dans laquelle ledit mécanisme d'augmentation et de réduction de distance (22, 122, 124) comprend une entretoise de support qui s'étend et se rétracte dans la direction radiale, ledit mécanisme d'augmentation et de réduction de distance (22, 122, 124) augmentant et réduisant la distance de capteur par le biais de l'extension et de la rétraction de ladite entretoise de support avec ledit capteur (24) maintenu sur une extrémité de ladite entretoise de support, l'extrémité étant sur un côté opposé à celui desdites faces de maintien d'outil (10).

4. Machine-outil selon la revendication 1,
dans laquelle, pendant que la distance de capteur est augmentée, la longueur dudit mécanisme d'augmentation et de réduction de distance (22, 122, 124) dans la direction radiale lorsqu'une pièce (12) avec un diamètre maximal que la broche (2) peut maintenir est maintenue par la broche (2) est telle que ledit capteur (24) est positionné sur un côté opposé au dit porte-outil à tourelle (7) avec la pièce (12) positionnée entre ceux-ci, et
ledit capteur (24) détecte des positions des deux extrémités d'un diamètre de la pièce (12) par le biais d'un déplacement dudit porte-outil à tourelle (7) pendant que la distance de capteur est augmentée par ledit mécanisme d'augmentation et de réduction de distance (22, 122, 124), les extrémités du diamètre étant sur un plan qui comprend un axe de rotation dudit porte-outil à tourelle (7) et un axe de rotation de la broche (2).

5. Machine-outil selon la revendication 4, comprenant en outre
une unité de commande (41) configurée pour : amener ledit mécanisme d'augmentation et de réduction de distance (22, 122, 124) à augmenter la distance de capteur ; et déplacer ledit porte-outil à tourelle (7) de sorte qu'une distance entre ledit capteur (24) et la pièce (12) varie, lorsque ledit porte-outil à tourelle (7) est à une position de rotation à laquelle ledit capteur (24) se trouve sur un côté vers la pièce (12).

6. Procédé pour mesurer un diamètre d'une pièce (12) en utilisant un capteur (24), ledit procédé étant destiné à être utilisé dans une machine-outil qui usine, avec un outil maintenu par un porte-outil à tourelle (7), la pièce (12) maintenue par une broche (2),
dans lequel ledit porte-outil à tourelle (7) a des faces de maintien d'outil (10) sur l'une desquelles un mécanisme d'augmentation et de réduction de distance (22, 122, 124) est monté, le mécanisme d'augmentation et de réduction de distance (22, 122, 124) maintenant le capteur (24) et augmentant et réduisant une distance de capteur qui est une distance entre l'une des faces de maintien d'outil (10) et le capteur (24) dans une direction radiale du porte-outil à tourelle (7), et
ledit procédé comprend :
la rotation du porte-outil à tourelle (7) de sorte que le capteur (24) soit positionné sur un côté vers la pièce (12) ;
l'augmentation de la distance de capteur effectuée par le mécanisme d'augmentation et de réduction de distance (22, 122, 124) ;
la mesure d'une position d'une première extrémité en utilisant le capteur (24) en déplaçant le porte-outil à tourelle (7) pendant que la distance de capteur est augmentée, la première extrémité étant plus proche du porte-outil à tourelle (7) qu'une deuxième extrémité, la première extrémité et la deuxième extrémité étant les deux extrémités du diamètre de la pièce (12) et positionnées sur un plan qui comprend un axe de rotation du porte-outil à tourelle (7) et un axe de rotation de la broche (2) ; et
la mesure d'une position de la deuxième extrémité en utilisant le capteur (24) en déplaçant le porte-outil à tourelle (7) pendant que la distance de capteur est augmentée.

7. Procédé selon la revendication 6,
dans lequel le mécanisme d'augmentation et de réduction de distance (22, 122, 124) comprend un bras qui se déplace de manière rotationnelle et a une extrémité par laquelle le capteur (24) est maintenu, et
dans ladite extension, la distance de capteur est augmentée par le biais d'un mouvement rotationnel du bras.

8. Procédé selon la revendication 6,
dans lequel le mécanisme d'augmentation et de réduction de distance (22, 122, 124) comprend une entretoise de support qui est extensible, l'entretoise de support ayant une extrémité par laquelle le capteur (24) est maintenu, l'extrémité étant opposée à une autre extrémité sur un côté vers celui des faces de maintien d'outil (10), et
dans ladite extension, la distance de capteur est augmentée par l'extension de l'entretoise de support.

9. Programme informatique enregistré sur un support d'enregistrement lisible par ordinateur pour commander un fonctionnement d'une machine-outil qui usine une pièce (12) maintenue par une broche (2),
dans lequel la machine-outil comprend :
un porte-outil à tourelle (7) ayant des faces de maintien d'outil (10), **caractérisé en ce que** ladite machine-outil comprend en outre
un capteur (24) pour mesurer des dimensions de la pièce (12) ; et
un mécanisme d'augmentation et de réduction de distance (22, 122, 124) monté sur l'une des faces de maintien d'outil (10), le mécanisme d'augmentation et de réduction de distance (22, 122, 124) maintenant le capteur (24) et augmentant et réduisant une distance de capteur qui est une distance entre la face de maintien d'outil et le capteur (24) dans une direction radiale du porte-outil à tourelle (7), et
ledit programme informatique amène un ordinateur à exécuter :
la rotation du porte-outil à tourelle (7) de sorte que le capteur (24) soit positionné sur un côté vers la pièce (12) ;
l'augmentation de la distance de capteur effectuée par le mécanisme d'augmentation et de réduction de distance (22, 122, 124) ;
la mesure d'une position d'une première extrémité en utilisant le capteur (24) en déplaçant le porte-outil à tourelle (7) pendant que la distance de capteur est augmentée, la première extrémité étant plus proche du porte-outil à tourelle (7) qu'une deuxième extrémité, la première extrémité et la deuxième extrémité étant les deux extrémités du diamètre de la pièce (12) et positionnées sur un plan qui comprend un axe de rotation du porte-outil à tourelle (7) et un axe de rotation de la broche (2) ; et
la mesure d'une position de la deuxième extrémité en utilisant le capteur (24) en déplaçant le porte-outil à tourelle (7) pendant que la distance de capteur est augmentée.
